# EUROPÄISCHE PATENTANMELDUNG

(11) **EP 4 810 184 A1**
(43) Veröffentlichungstag der Anmeldung: **23.09.2026**
(21) Anmeldenummer: 25164073.6
(22) Anmeldetag: 17.03.2025
(51) Int. Cl.: B23K 9/173, B23K 9/28, B23K 9/32, B23K 37/003

(54) **SCHWEISSBRENNER MIT INTEGRIERTER SCHWEISSDRAHTVORSCHUBEINHEIT UND KÜHLUNG**

(71) Anmelder: FRONIUS INTERNATIONAL GmbH, 4643 Pettenbach (AT)
(72) Erfinder: Resch, Christian, 4643 Pettenbach (AT); Stumpfl, Christian, 4643 Pettenbach (AT)
(74) Vertreter: Weiss Patentanwalts GmbH

(57) **Zusammenfassung**

Offenbart ist ein Schweißbrenner (1) mit integrierten Schweißdrahtvorschubeinheit (17), mit einer effizienten und gleichzeitig kompakten Kühlung des Schweißbrenners (1) und der Schweißdrahtvorschubeinheit (17). Der Schweißbrenner (1) zeichnet sich dadurch aus, dass im Brennergehäuse (3) des Schweißbrenners (1) ein Kühlblock (41) mit einem durch den Kühlblock (41) durchgehenden Kühlblockkanal (47) und ein Isolierkörper (50) mit einem durch den Isolierkörper (50) durchgehenden Isolierstreckenkanal (51) angeordnet ist, dass der Kühlblockkanal (47) und der Isolierstreckenkanal (51) entweder Teil der Brennergehäusevorlaufleitung (42) oder Teil der Brennergehäuserücklaufleitung (45) sind, dass der Isolierkörper (50) aus einem elektrisch isolierenden Material gefertigt ist und dass eine Länge des Isolierstreckenkanal (51) im Isolierkörper (50) mindestens 50mm beträgt.

## Beschreibung

Die gegenständliche Erfindung betrifft einen Schweißbrenner mit integrierter Schweißdrahtvorschubeinheit mit einem Elektromotor, wobei der Schweißbrenner ein Brennergehäuse und einen Brennerhals umfasst und der Elektromotor im Brennergehäuse angeordnet ist, wobei im Brennerhals eine Brennerhalsvorlaufleitung und eine Brennerhalsrücklaufleitung für eine Kühlflüssigkeit vorgesehen sind und die im Brennerhals liegenden Enden der Brennerhalsvorlaufleitung und der Brennerrücklaufleitung miteinander verbunden sind, wobei im Brennergehäuse eine Brennergehäusevorlaufleitung und eine Brennergehäuserücklaufleitung vorgesehen sind und die Brennergehäusevorlaufleitung mit der Brennerhalsvorlaufleitung verbunden ist und die Brennergehäuserücklaufleitung mit der Brennerhalsrücklaufleitung verbunden ist. Die Erfindung betrifft auch ein Schweißgerät mit einer Schweißstromquelle und einem erfindungsgemäßen Schweißbrenner.

Schweißbrenner zum Durchführen eines Schweißverfahrens, insbesondere zum MIG-(Metall Inert Gas) oder MAG- (Metall Aktiv Gas) Schweißen, sind hinlänglich bekannt. Bei solchen Schweißbrennern wird mit einer Schweißdrahtvorschubeinheit ein Schweißdraht durch den Schweißbrenner durchgeführt und in Richtung der Brennerdüse bewegt. Der Schweißdraht dient dabei gleichzeitig als Schweißelektrode. Dem Schweißbrenner wird auch eine elektrische Schweißleitung zugeführt, an der ein elektrisches Potential anliegt und über die während des Schweißens ein Schweißstrom fließt. Im Schweißbrenner ist in der Regel ein Kontaktrohr vorgesehen, das mit der Schweißleitung verbunden ist und an dem somit auch das elektrische Potential anliegt. Der Schweißdraht kontaktiert das Kontaktrohr im Schweißbrenner, wodurch das elektrische Potential auch auf den Schweißdraht (die Schweißelektrode) übertragen wird. Zwischen dem elektrischen Potential des Schweißdrahtes und dem zu schweißenden Werkstück (an dem eine elektrische Rückleitung zur Schweißstromquelle angeschlossen ist), liegt damit eine elektrische Schweißspannung an, aufgrund der ein Lichtbogen zwischen der Schweißelektrode und dem Werkstück brennt. Wird der elektrische Schweißkreis durch Zünden eines Lichtbogens geschlossen, fließt im Schweißkreis der Schweißstrom. Das ist natürlich alles hinlänglich bekannt.

Ein Schweißbrenner besteht in der Regel aus einem Brennergehäuse und einem Brennerhals. Der Brennerhals ist lösbar über eine Kupplung, beispielsweise in Form eines Gewindes mit Überwurfmutter, mit dem Brennergehäuse verbunden. Der Brennerhals hat an einem Ende die Brennerdüse und am anderen Ende den brennerhalsseitigen Teil der Kupplung, beispielsweise die Überwurfmutter. Bevorzugt ist das Brennergehäuse aus mehreren Teilen aufgebaut, wie beispielsweise einem Brennergrundkörper, einer Abdeckung, einer Steuerelektronik, einen Brennerhalteteil oder Brennergriffteil usw. Bei einem gekühlten Schweißbrenner sind ferner eine Kühlmittelvorlaufleitung und eine Kühlmittelrücklaufleitung vorgesehen, die bis in den Brennerhals reichen.

Es sind auch Schweißbrenner mit integrierter Schweißdrahtvorschubeinheit bekannt. Bei solchen Schweißbrennern ist ein Elektromotor im Brennergehäuse, beispielsweise im Brennergrundkörper, integriert, der zusammen mit einer vom Elektromotor angetriebenen Antriebsrolle und einer Gegendruckrolle, zwischen denen der Schweißdraht geklemmt ist, die Schweißdrahtvorschubeinheit ausbildet.

In Zusammenhang mit solchen Schweißbrennern mit integrierter Schweißdrahtvorschubeinheit gibt es eine Fülle von Schwierigkeiten.

Ein grundlegendes und alles beeinflussendes Problem liegt darin, dass im Schweißbrenner nur sehr wenig Platz vorhanden ist, um die Schweißdrahtvorschubeinheit zu integrieren. Das ist dem Umstand geschuldet, dass der Schweißbrenner möglichst kompakt gebaut werden muss und nicht beliebig groß werden darf.

Ein anderes Problem liegt darin, dass mit der Schweißdrahtvorschubeinheit oftmals hochdynamische Schweißdrahtbewegungen realisiert werden müssen, womit die Schweißdrahtgeschwindigkeit hohen Änderungsraten und bei manchen Schweißprozessen (wie z.B. beim Cold Metal Transfer (CMT) Schweißprozess) auch Richtungsänderungen der Schweißdrahtbewegung mit hohen Frequenzen erforderlich sind. Bei einem heutigen CMT-Schweißprozess ändert sich die Richtung der Schweißdrahtgeschwindigkeit (Push/Pull-Phasen) beispielsweise mit einer Frequenz zwischen 100 - 120 Hz. Das stellt hohe Anforderungen an den Elektromotor der Schweißdrahtvorschubeinheit und benötigt im Betrieb auch hohe Motorströme. Damit einhergehend erwärmt sich der Elektromotor im Betrieb stark und es bedarf einer effizienten Kühlung des Elektromotors im Schweißbrenner, um eine Überhitzung des Elektromotors zu verhindern.

Es sind aus dem Stand der Technik verschiedene Kühlkonzepte für den Elektromotor bekannt.

In einer einfachen Ausführung wird der Elektromotor durch Wärmestrahlung in die Umgebung gekühlt. Hierzu sind am Schweißbrenner in der Regel Kühlrippen vorgesehen, um die Kühlleistung zu erhöhen. US 2007/0119840 A1 lehrt die Kühlung eines Elektromotors der Schweißdrahtvorschubeinheit durch Wärmestrahlung in die Umgebung. Diese Art von Kühlung ist für die Kühlung heutiger Schweißbrenner mit integrierter Schweißdrahtvorschubeinheit ausreichend, weshalb darüber hinaus gehende Kühlkonzepte nur die Komplexität des Schweißbrenners und der Verwendung des Schweißbrenners erhöhen würde.

In anderen Kühlkonzepten ist beispielsweise für den Elektromotor der Schweißdrahtvorschubeinheit ein eigener Kühlkreis vorgesehen. Das zeigen JP 2021-164960 A und JP 2022-50815 A für ein gasförmiges Kühlmedium. In der JP 2022-50815 A gibt es im Schweißbrenner zusätzlich noch einen separaten Kühlkreislauf mit Kühlflüssigkeit zum Kühlen des Schweißbrenners. In JP 2016-129465 A wird das Schutzgas für den Schweißprozess gleichzeitig zum Kühlen des Elektromotors der Schweißdrahtvorschubeinheit verwendet.

Auch in US 2007/0119840 A1 können zusätzlich Kühlkanäle im Brennergehäuse, insbesondere in einem Teil, in dem der Stator des Elektromotors untergebracht ist, vorgesehen sein, durch die ein flüssiges oder gasförmiges Kühlmedium geleitet wird. Es können im Schweißbrenner auch separate Kühlleitungen für die Kühlung des Schweißbrenners vorgesehen sein, die auch um den Teil des Brennergehäuses, in dem der Stator des Elektromotors untergebracht ist, verlaufen können.

Die Kühlung mit einem gasförmigen Kühlmedium ist weniger effektiv wie die Kühlung mit einer Kühlflüssigkeit, insbesondere wenn nur beschränkter Raum für das Vorsehen von Kühlkanälen vorhanden ist. Das Vorsehen eines separaten Kühlkreises für den Elektromotor ist wiederum aufwendig und erhöht auch den Aufwand zum Betreiben des Schweißbrenners, weil dann auch ein eigener Kühlkreis für die Kühlung des Elektromotors erforderlich ist, in der Regel zusätzlich zum erforderlichen Kühlkreis für den Schweißbrenner.

Die Verwendung einer Kühlflüssigkeit als Kühlmedium zum Kühlen des Schweißbrenners oder eines Elektromotors einer Schweißdrahtvorschubeinheit birgt aber noch ein anderes Problem. Im Schweißbrenner liegt an vielen Stellen das zum Schweißen notwendige elektrische Potential an, beispielsweise am Kontaktrohr im Brennerhals, an der Kontaktierung der Schweißleitung mit dem Kontaktrohr, an der Kupplung für den Brennerhals. Die Kühlflüssigkeit zum Kühlen des Schweißbrenners kommt unweigerlich in Kontakt mit Teilen des Schweißbrenners, an denen das elektrische Potential anliegt. Damit wird das elektrische Potential auch auf die Kühlflüssigkeit und auf die Kühlleitung zum Führen der Kühlflüssigkeit übertragen. Damit muss dafür gesorgt werden, dass die Kühlleitung keine anderen elektrisch leitenden Bauteile des Schweißbrenners kontaktiert, weil auf diese dann ebenfalls das elektrische Potential übertragen werden würde. Das könnte ein Sicherheitsproblem darstellen, weil ein Anwender des Schweißgeräts bzw. des Schweißbrenners unter Umständen solche auf dem elektrischen Potential liegenden Bauteile berühren könnte. Dem könnte man entgegenwirken, indem man solche Kühlleitungen beispielsweise elektrisch isolierend ausführt. Würde man aber beispielsweise im Schweißbrenner einen gemeinsamen Kühlkreis zum Kühlen des Elektromotors der Schweißdrahtvorschubeinheit und des Schweißbrenners mit einer Kühlflüssigkeit vorsehen, reicht eine elektrische Isolation einer Kühlleitung nicht aus, weil das elektrische Potential auch durch die Kühlflüssigkeit übertragen werden würde. Mit Kühlkanälen im Gehäuse des Elektromotors, das üblicherweise aus Metall gefertigt ist, würde am Gehäuse und damit unter Umständen auch an anderen das Gehäuse kontaktierenden Bauteilen das elektrische Potential anliegen mit den schon erwähnten sicherheitstechnischen Auswirkungen. Abgesehen davon könnte ein elektrisches Potential am Motorgehäuse auch die Funktion des Elektromotors selbst stören. Man könnte zwar auch versuchen, solche Kühlkanäle gegenüber der Kühlflüssigkeit elektrisch zu isolieren, was aber nur unter hohem Aufwand möglich wäre. Dieses Problem tritt bei der Verwendung von Gas als Kühlmedium nicht auf, weil Gas eine deutlich niedrigere elektrische Leitfähigkeit aufweist als eine Flüssigkeit und übliches Gas somit als elektrischer Isolator wirkt.

Die derzeitigen Bestrebungen gehen dahin, die Leistungsfähigkeit der im Schweißbrenner integrierten Schweißdrahtvorschubeinheit zu erhöhen, insbesondere die Änderungsraten der Schweißdrahtbewegung und/oder die mögliche Frequenz der Änderung der Schweißdrahtbewegung zu erhöhen. Das geht nur mit leistungsfähigeren Elektromotoren, was aber wiederum mit einer noch stärkeren Erwärmung des Elektromotors im Betrieb des Schweißbrenners einhergeht. Die dabei entstehende Wärme ließe sich mit einer Kühlung durch Wärmestrahlung an Kühlrippen alleine nicht mehr abführen. Es ist daher eine zusätzliche Kühlung notwendig. Ein separater Kühlkreis für die Kühlung des Elektromotors ist nachteilig, wie oben bereits ausgeführt und soll daher auch vermieden werden. Die Verwendung von Kühlgas als Kühlmedium ist ebenfalls problematisch, weil eine benötigte Kühlung mit Kühlgas aufgrund des beengten und beschränkten Bauraums im Schweißbrenner kaum realisierbar ist. Die Verwendung von Kühlflüssigkeit verursacht ebenfalls Schwierigkeiten, insbesondere dann, wenn man eben keine separaten Kühlkreise für die Kühlung des Schweißbrenners und des Elektromotors der Schweißdrahtvorschubeinheit anstrebt.

Es besteht damit ein grundsätzliches Bedürfnis für einen Schweißbrenner mit integrierten Schweißdrahtvorschubeinheit, mit einer effizienten und gleichzeitig kompakten Kühlung des Schweißbrenners und der Schweißdrahtvorschubeinheit.

Das wird erreicht, indem im Brennergehäuse ein Kühlblock mit einem durch den Kühlblock durchgehenden Kühlblockkanal und ein Isolierkörper mit einem durch den Isolierkörper durchgehenden Isolierstreckenkanal angeordnet ist, dass der Kühlblockkanal und der Isolierstreckenkanal entweder Teil der Brennergehäusevorlaufleitung oder Teil der Brennergehäuserücklaufleitung sind, dass der Isolierkörper aus einem elektrisch isolierenden Material gefertigt ist und dass eine Länge des Isolierstreckenkanal im Isolierkörper mindestens 50mm, vorzugsweise mindestens 75mm und besonders bevorzugt mindestens 100mm, beträgt.

Durch diese Ausführung kann einerseits eine kompakte Kühlung erzielt werden, weil nur ein Kühlkreis für die Kühlung des Schweißbrenners und der Schweißdrahtvorschubeinheit benötigt wird. Durch den Kühlblock wird zudem eine effiziente Kühlung erzielt, weil damit sehr gezielt die wärmemäßig am höchsten belasteten Bauteile, insbesondere der Elektromotor der Schweißdrahtvorschubeinheit, gekühlt werden können. Durch die erfindungsgemäße Ausführung des Isolierkörpers wird zudem sichergestellt, dass kein elektrisches Potential aus dem Brennerhals über eine Kühlflüssigkeitsleitung im Schweißbrenner und die Kühlflüssigkeit selbst auf das Brennergehäuse übertragen wird, was die Kühlung von Brennergehäuse und Brennerhals mit einem seriellen Kühlkreis mit einer Kühlflüssigkeit überhaupt erst ermöglicht.

In einer bevorzugten Ausführung umfasst das Brennergehäuse einen Brennergrundkörper, und der Kühlblock ist als ein separater am Brennergrundkörper, vorzugsweise an einem Motorgehäuse des Brennergrundkörpers zur Aufnahme des Elektromotors, angeordneter Bauteil ausgeführt. Das ermöglicht es, den Kühlblock hinsichtlich bestmöglicher Kühlwirkung auszulegen, auszuführen und im Brennergehäuse anzuordnen.

Für eine möglichst kompakte Ausführung ist der Isolierkörper am Kühlblock befestigt, wobei am Kühlblock eine Kühlblockaustrittsöffnung vorgesehen ist, die mit einer Isolierkörpereintrittsöffnung am Isolierkörper verbunden ist.

Vorteilhaft ist die Brennergehäuserücklaufleitung oder die Brennergehäusevorlaufleitung und/oder der Kühlblock zumindest teilweise als ein in einem 3D-Druckverfahren gefertigter Bauteil ausgeführt, vorzugsweise aus einer Kupfer-Nickel-Chrom-Legierung. Durch den 3D-Druck kann die Anzahl der Einzelteile dieser Bauteile reduziert werden und damit auch die Anzahl möglicher Stromübergänge zwischen den Einzelteilen. Damit können die durch Stromübergänge hervorgerufenen Verluste verringert werden, wodurch die im Schweißbrenner erzeugte Wärme verringert wird. Auch das hilft, die Kühlung kompakter und effizienter zu machen.

In einem Schweißgerät ist es vorteilhaft, wenn der Schweißbrenner eingerichtet ist, eine mit einem Leitfähigkeitssensor im Schweißbrenner erfasste elektrische Leitfähigkeit der Kühlflüssigkeit an eine Steuereinheit der Schweißstromquelle des Schweißgeräts zu übermitteln und die Steuereinheit eingerichtet ist, die Schweißspannung in Abhängigkeit von der erfassten Leitfähigkeit der Kühlflüssigkeit zu begrenzen. Damit kann eine weitere Sicherheitsstufe eingezogen werden, die sicherstellt, dass die im Isolierkörper vorgesehene Länge des Isolierstreckenkanals unter allen Umständen und insbesondere auch bei an sich für das Schweißgerät nicht zulässigen oder nicht für das Schweißgerät spezifizierten Kühlflüssigkeiten ausreicht.

Die gegenständliche Erfindung wird nachfolgend unter Bezugnahme auf die Figuren 1 bis 8 näher erläutert, die beispielhaft, schematisch und nicht einschränkend vorteilhafte Ausgestaltungen der Erfindung zeigen. Dabei zeigt
Fig.1 eine Ausführung eines Schweißbrenners,
Fig.2 den Schweißbrenner mit abgenommener Abdeckung,
Fig.3 das erfindungsgemäße Kühlkonzept des Schweißbrenners,
Fig.4 eine Ausführung eines Brennergehäuses,
Fig.5 eine Ausführung des Schweißbrenners mit Kühlblock und Isolierkörper,
Fig.6 den Kühlblock, den Isolierkörper und weitere Leitungen in einer erfindungsgemäßen Ausführung,
Fig.7 eine mögliche Ausführung des Isolierkörpers und
Fig.8 eine mögliche Ausführung des Kühlbocks.

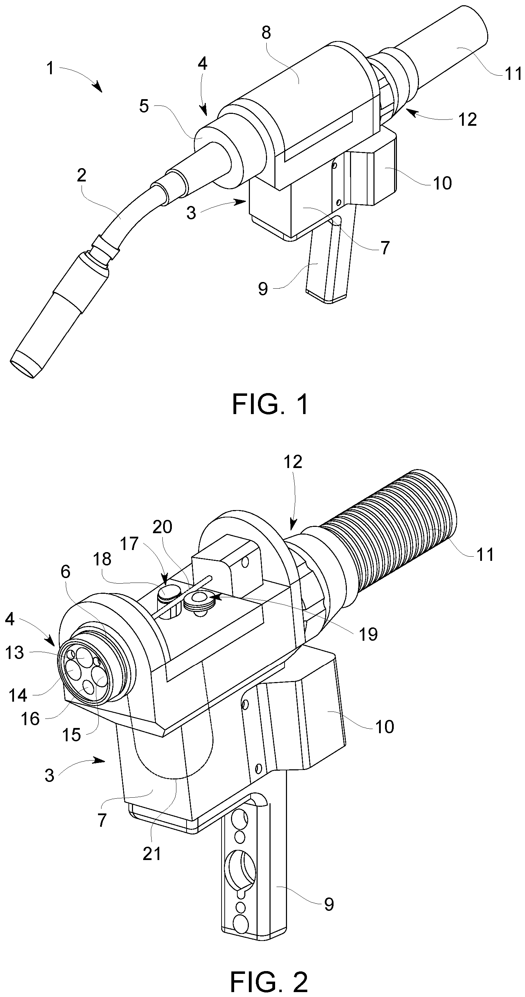

Fig.1 zeigt eine typische Ausführung eines Schweißbrenners 1 mit einem Brennergehäuse 3 und einem Brennerhals 2. Der Brennerhals 2 ist wie üblich mittels einer Kupplung 4 mit dem Brennergehäuse 3 lösbar verbunden. Anstelle einer Kupplung 4 könnte der Brennerhals 2 aber auch fix mit dem Brennergehäuse 3 verbunden sein. Die Kupplung ist beispielsweise als Überwurfmutter 5 am Brennerhals 2 und einem entsprechenden Gewinde 6 am Brennergehäuse 3 (Fig.2) ausgeführt, kann aber auch beliebig anders ausgeführt sein.

Das Brennergehäuse 3 umfasst einen Brennergrundkörper 7. Ferner kann das Brennergehäuse 3 noch weitere Bauteile umfassen, wie eine Abdeckung 8, einen Brennerhalteteil 9 für die Anordnung des Schweißbrenners 1 an einem Schweißroboter oder Steuerelektronik 10. Wenn der Schweißbrenner 1 handgeführt ist, kann das Brennergehäuse 3 anstelle eines Brennerhalteteil 9 (oder auch zusätzlich) auch einen Brennergriffteil umfassen.

Der Schweißbrenner 1 ist bei Verwendung über ein Schlauchpaket 11 mit einer Schweißstromquelle (in Fig.1 nicht dargestellt) verbunden, gegebenenfalls auch mit einer Schutzgasquelle und einer Kühlflüssigkeitsquelle (die aber auch in der Schweißstromquelle oder aber auch im Schweißsystem integriert sein könnten). Das Schlauchpaket 11 kann die elektrische Schweißleitung, eine Leitung für den Schweißdraht, eine Schutzgasleitung, sowie einen Kühlflüssigkeitsvorlauf und einen Kühlflüssigkeitsrücklauf, Steuerleitungen usw. umfassen. Das Schlauchpaket 11 ist in der Regel über eine Schlauchpaketkupplung 12 lösbar mit dem Schweißbrenner 1 verbunden. Das Schlauchpaket 11 kann aber auch fest mit dem Schweißbrenner 1 verbunden sein.

In Fig.2 ist die Abdeckung 8 abgenommen und der Brennerhals 2 entfernt. Es ist damit der am Brennergehäuse 3 angeordnete Teil der Kupplung 4 (hier ein Gewinde 6) zu sehen. Es sind auch Anschlüsse erkennbar, und zwar ein Schweißdrahtanschluss 13 für den Schweißdraht, ein Kühlflüssigkeitsvorlaufanschluss 14 und ein Kühlflüssigkeitsrücklaufanschluss 15, ein Schutzgasanschluss 16 und auch Steuerleitungsanschlüsse für Steuerleitungen können vorhanden sein. Es kann auch ein Anschluss für die elektrische Schweißleitung vorgesehen sein. Oftmals ist aber der am Brennergehäuse 3 angeordnete Teil der Kupplung 4 (hier das Gewinde 6) mit der Schweißleitung verbunden, sodass dieser Teil bei Verwendung des Schweißbrenners 1 auf dem elektrischen Potential der Schweißleitung liegt. Dieser Teil wäre in diesem Fall aus einem elektrisch leitenden Material, wie beispielsweise Messing, gefertigt. Das elektrische Potential wird dann vom Brennerhals 2, bzw. vom Kontaktrohr im Brennerhals 2 kontaktiert. Hier ist ersichtlich, dass die Kühlflüssigkeit im Kühlflüssigkeitsvorlauf, die durch den am Brennergehäuse 3 angeordneten Teil der Kupplung 4 (hier ein Gewinde 6) durchgeführt ist, auch direkt am elektrischen Potential der Schweißleitung anliegen würde.

Es kann auch sein, dass die elektrische Schweißleitung im Kühlflüssigkeitsvorlauf oder Kühlflüssigkeitsrücklauf von der Schweißstromquelle zum Schweißbrenner 1 geführt ist. Das wird gemacht, um die elektrische Schweißleitung, über die im Betrieb des Schweißbrenners 1 ein hoher elektrischer Strom von der Schweißstromquelle zum Schweißbrenner 1 fließt, zu kühlen. Die elektrische Schweißleitung würde dann im Schweißbrenner 1, beispielsweise im Brennergehäuse 3 aus dem Kühlflüssigkeitsvorlauf oder Kühlflüssigkeitsrücklauf herausgeführt und könnte dann mit dem Kupplungsteil der Kupplung 4 am Brennergehäuse 3 (hier dem Gewinde 6) verbunden sein.

In Fig.2 ist außerdem eine im Schweißbrenner 1 integrierte Schweißdrahtvorschubeinheit 17 teilweise dargestellt. Sichtbar ist in Fig.2 eine Antriebsrolle 18 und eine Druckrolle 19, zwischen denen bei Verwendung des Schweißbrenners 1 zum Schweißen ein Schweißdraht 20 (in Fig.2 gestrichelt angedeutet) durchgeführt wird. Die Antriebsrolle 18 ist durch einen Elektromotor 21 (in Fig.2 gestrichelt angedeutet) angetrieben, wobei der Elektromotor 21 im Brennergehäuse 3, üblicherweise im Brennergrundkörper 7, angeordnet ist.

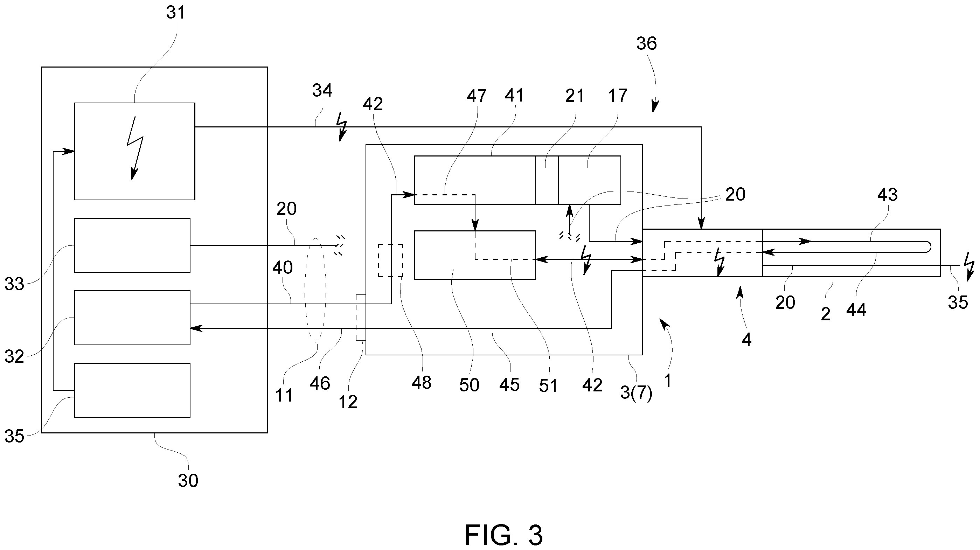

Das erfindungsgemäße Kühlkonzept des Schweißbrenners 1 wird nachfolgend mit Bezugnahme auf die Figuren 3 bis 8 erläutert, die verschiedene Ansichten und verschiedene Teile einer vorteilhaften Ausgestaltung der Erfindung zeigen.

Fig.3 zeigt das Kühlkonzept in einer schematischen Darstellung am Beispiel eines Schweißgeräts 36. In Fig.3 ist ein Schweißgerät 36 mit einer Schweißstromquelle 30 dargestellt, mit einem Schweißleistungsteil 31, das beim Schweißen an einer elektrischen Schweißleitung 34 den elektrischen Schweißstrom und die elektrische Schweißspannung bereitstellt. Die Schweißleitung 34 ist mit einem Schweißbrenner 1 des Schweißgeräts 36 verbunden und dort mit einer Schweißelektrode 35. Die (abschmelzende) Schweißelektrode 35 wird durch den Schweißdraht 20 ausgebildet, der über eine im Schweißbrenner 1 integrierte Schweißdrahtvorschubeinheit 17 in der für den jeweiligen Schweißprozess erforderlichen Bewegung bewegt wird. In der Schweißstromquelle 30 (oder auch extern der Schweißstromquelle 30) kann auch eine Drahtvorratstrommel 33 vorgesehen sein, von der der Schweißdraht 20 abgewickelt wird. In der Schweißstromquelle 30 (oder auch extern der Schweißstromquelle 30) ist auch eine Kühleinheit 32 vorgesehen, beispielsweise ein Kühlflüssigkeitsbehälter mit Pumpe. Die Kühleinheit 32 ist über eine Vorlaufleitung 40 mit einer Brennergehäusevorlaufleitung 42 im Schweißbrenner 1, konkret im Brennergehäuse 3, verbunden. Die Brennergehäusevorlaufleitung 42 ist wiederum mit einer Brennerhalsvorlaufleitung 43 verbunden, in der Regel über entsprechende Anschlüsse in der Kupplung 4 zwischen Brennergehäuse 3 und Brennerhals 2. Das Ende der Brennerhalsvorlaufleitung 43 ist im Brennerhals 2 mit einer im Brennerhals verlaufenden Brennerhalsrücklaufleitung 44 verbunden. Die Brennerhalsrücklaufleitung 44 ist wiederum mit einer Brennergehäuserücklaufleitung 45 im Schweißbrenner 1, konkret im Brennergehäuse 3, verbunden, in der Regel über entsprechende Anschlüsse in der Kupplung 4 zwischen Brennergehäuse 3 und Brennerhals 2. Die Brennergehäuserücklaufleitung 45 ist über eine Rücklaufleitung 46 mit der Kühleinheit 32 verbunden.

Die Vorlaufleitung 40, die Rücklaufleitung 46 und der Schweißdraht 20 (und gegebenenfalls weitere Leitungen, wie eine Schweißleitung 34) können beispielsweise in einem Schlauchpaket 11 geführt sein, das über die Schlauchpaketkupplung 12 mit dem Schweißbrenner 1 verbunden ist, wie in Fig.3 gestrichelt angedeutet.

Um den Elektromotor 21 der Schweißdrahtvorschubeinheit 17 effizient zu kühlen ist im Brennergehäuse 3 ein Kühlblock 41 mit einem durchgehenden Kühlblockkanal 47 vorgesehen. Der Kühlblockkanal 47 des Kühlblocks 41 ist Teil der Brennergehäusevorlaufleitung 42 im Brennergehäuse 3. Der Kühlblock 41 wird im Brennergehäuse 3 natürlich so angeordnet, dass der Elektromotor 21 möglichst effizient gekühlt wird. Der Kühlblock 41 kann ein separater Bauteil sein, kann aber im Brennergrundkörper 7 integriert sein. Im letzteren Fall wäre der Kühlblockkanal 47 im Brennergrundkörper 7 integriert. Im Fall eines separaten Bauteils, kann der Kühlblock 41 auch aus einem hinsichtlich des Wärmeüberganges günstigen Material gefertigt sein, beispielsweise aus einer Kupfer-Nickel-Chrom-Legierung, wie CuNiSiCr oder CuNi2SiCr. Mit einer Kupfer-Nickel-Chrom-Legierung könnte der Kühlblock 41 auch in einem 3D-Druck Verfahren hergestellt werden, was hinsichtlich der Gestaltungsmöglichkeiten des Kühlblocks 41 sehr vorteilhaft ist.

Es ist damit ein Kühlkreis mit einer Kühlflüssigkeit als Kühlmittel ausgebildet, wobei die Kühlflüssigkeit von der Kühleinheit 32 über den Kühlblock 41 im Brennergehäuse 3, den Brennerhals 2 und wieder zurückgefördert wird. Aufgrund dieser seriellen Kühlung reicht ein Kühlkreis für die Kühlung des Elektromotors 21 und des Brennerhalses 2 aus, was den Aufwand für die Kühlung des gesamten Schweißbrenners 1 reduziert.

Allerdings ergibt sich daraus das eingangs erläuterte Problem, dass über die Kühlflüssigkeit das am Schweißdraht 20 (der Schweißelektrode 25) anliegende elektrische Potential (in Fig.3 angedeutet durch das Pfeilsymbol) auf den Kühlblock 41, und damit auch auf den Brennergrundkörper 7, übertragen werden würde, mit den damit verbundenen sicherheitstechnischen und funktionalen Problemen. Es wäre somit nicht ausreichend, bloß die Brennergehäusevorlaufleitung 42 im Brennergehäuse 3 zwischen Brennerhals 2 und Kühlblock 41 aus einem elektrisch isolierenden Material zu fertigen, weil die Kühlflüssigkeit selbst ein elektrischer Leiter ist.

Um dieses Problem zu beheben ist im Brennergehäuse 3, vorzugsweise im Brennergrundkörper 7 des Brennergehäuses 3, ein Isolierkörper 50 mit einem durch den Isolierkörper 50 durchgehenden Isolierstreckenkanal 51 angeordnet, wobei der Isolierstreckenkanal 51 Teil der Brennergehäusevorlaufleitung 42 ist. Der Isolierstreckenkanal 51 ist zwischen dem Kühlblockkanal 47 und dem Brennerhals 2, vorzugsweise zwischen dem Kühlblockkanal 47 und der Kupplung 4 zwischen Brennergehäuse 3 und Brennerhals 2 angeordnet.

Der Isolierkörper 50 ist zum einen aus einem elektrisch isolierenden Material gefertigt. Das bedeutet, dass es am Isolierkörper 50 zumindest keine elektrische Verbindung zwischen einer Isolierkörpereintrittsöffnung 59 des Isolierstreckenkanal 51 und einer Isolierkörperaustrittsöffnung 60 des Isolierstreckenkanals 51 gibt. Vorzugsweise ist der gesamte Isolierkörper 50 aus einem elektrisch isolierenden Material gefertigt. Der Isolierkörper 50 unterbricht damit die Brennergehäusevorlaufleitung 42 elektrisch. Unter elektrisch isolierendem Material werden im Sinne dieser Erfindung Materialien mit einem hohen spezifischen elektrischen Widerstand von ≥ 10⁸ Ωcm, und somit elektrische Nichtleiter, verstanden.

Der Isolierkörper 50 wird vorzugsweise aus einem Kunststoff gefertigt. Hier kann grundsätzlich jeder elektrisch isolierende Kunststoff verwendet werden. Je nach Fertigungsart ist der Kunststoff vorzugsweise spritzgussfähig und/oder schweißfähig (beispielsweise für das Ultraschallschweißen). Vorzugsweise kommen thermoplastische Kunststoffe zum Einsatz. Die Fertigung erfolgt vorteilhaft in einem Spritzgussverfahren, weil das hinsichtlich der Gestaltungsmöglichkeiten des Isolierkörpers 50 sehr vorteilhaft ist. Auch eine Fertigung mittels gefügter, beispielsweise Ultraschall-gefügter, Spritzgussteile ist möglich.

Um zu verhindern, dass sich das elektrische Potential der Schweißleitung 34 (des Schweißdrahtes 20) über die Kühlflüssigkeit überträgt, ist zusätzlich vorgesehen, dass der Isolierstreckenkanal 51 im Isolierkörper 50 mindestens 50mm Länge hat, vorzugsweise mindestens 75mm, ganz besonders vorteilhaft mindestens 100mm Länge.

Über die Kühlflüssigkeit fließt im Einsatz des Schweißbrenners 1 ein elektrischer Ableitstrom. Ein Ableitstrom ist ein elektrischer Strom, der unter üblichen Betriebsbedingungen in einem unerwünschten Strompfad, hier der Kühlflüssigkeit, fließt. Die Kühlflüssigkeit hat einen bestimmten elektrischen Leitwert G (Kehrwert des spezifischen elektrischen Widerstandes R). Der Zusammenhang zwischen dem Leitwert G der Kühlflüssigkeit in einer Kühlflüssigkeitsleitung und der elektrischen Leitfähigkeit κ der Kühlflüssigkeit (als bekannter Stoffparameter der Kühlflüssigkeit) ist bekanntermaßen gegeben durch $G = \frac{1}{R} = κ \frac{A}{l}$, mit dem Querschnitt A der Kühlflüssigkeitsleitung und der Länge l der Kühlflüssigkeitsleitung. Im Bereich der Schweißgeräte ist der maximale zulässige Ableitstrom, beispielsweise aufgrund sicherheitstechnischer Vorschriften, beispielsweise 10 mA bei einer Spannung von 500 V (wobei die Schweißspannungen beim Schweißen in der Regel deutlich (um einen Faktor 10) darunter liegen). Daraus ergibt sich ein notwendiger minimaler Widerstand der Kühlflüssigkeit von 50 kΩ. Wenn man von Leitungswasser als Kühlflüssigkeit ausgeht, kann man eine elektrische Leitfähigkeit κ von maximal 1000 µS/cm (in der Regel eher darunter) annehmen. Nimmt man eine Querschnittsfläche des Isolierstreckenkanal 51 von 15 mm² an, dann würde sich eine notwendige Länge des Isolierstreckenkanal 51 von 75 mm ergeben, um den elektrischen Ableitstrom bei einer Spannung von 500 V auf 10 mA zu begrenzen. In der Regel wird aber nicht mit herkömmlichem Leitungswasser als Kühlflüssigkeit gekühlt, sondern mit destilliertem Wasser, das nur mehr eine elektrische Leitfähigkeit κ von maximal 20 µS/cm aufweist. Für destilliertes Wasser wäre folglich eine deutlich geringere Länge l des Isolierstreckenkanals 51 ausreichend.

Mit der Länge des Isolierstreckenkanals 51 von 50 mm ist man jedenfalls auf der sicheren Seite und kann übliche Kühlflüssigkeiten abdecken. Das ist insbesondere deshalb wichtig, weil man als Hersteller von Schweißgeräten und Schweißbrennern 1 nicht unter Kontrolle hat, welche Kühlflüssigkeit tatsächlich verwendet wird.

Mit dem Isolierkörper 50 mit dem Isolierstreckenkanal 51 kann damit verhindert werden, dass sich das elektrische Potential der Schweißleitung 34 über die Kühlflüssigkeit und die Brennergehäusevorlaufleitung 42 auf den Brennergrundkörper 7 überträgt und dass ein unzulässig hoher elektrischer Ableitstrom fließt.

In einer vorteilhaften Ausgestaltung ist im Schweißbrenner 1, vorzugsweise im Brennergehäuse 3, zusätzlich ein Leitfähigkeitssensor 48 (in Fig.3 gestrichelt angedeutet) vorgesehen, der die elektrische Leitfähigkeit κ der im Schweißbrenner 1 verwendeten Kühlflüssigkeit ermittelt. Damit kann aufgrund der Kenntnis der Geometrie des Isolierstreckenkanals 51 (Querschnitt, Länge) die maximal zulässige Schweißspannung ermittelt werden, mit der mit dem Schweißbrenner 1 geschweißt werden darf. Eine Steuereinheit 35 der Schweißstromquelle 30 kann die Schweißspannung auf der Schweißleitung 34 entsprechend begrenzen. Dazu kann die erfasste elektrische Leitfähigkeit κ über eine Steuerleitung vom Schweißbrenner 1 zur Schweißstromquelle 30 übermittelt werden.

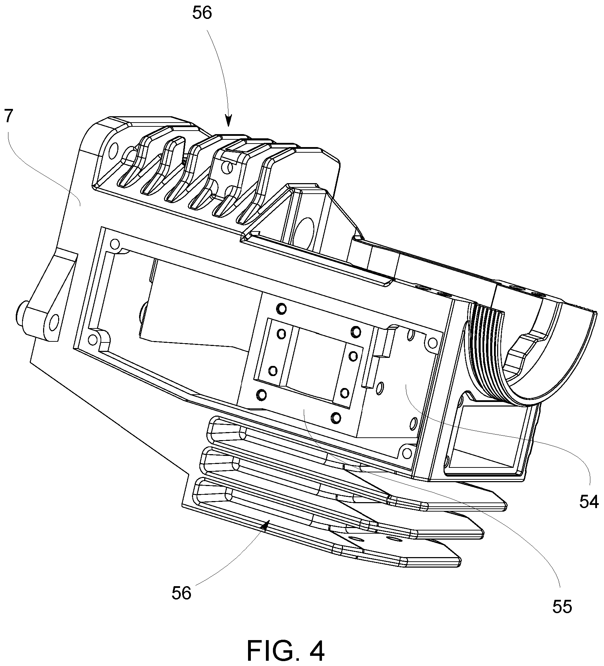

In den Figuren 4 bis 8 ist eine mögliche konstruktive Ausgestaltung eines erfindungsgemäßen Schweißbrenners 1 gezeigt.

Fig.4 zeigt eine Ausgestaltung des Brennergrundkörpers 7 mit einem integriertem Motorgehäuse 55. Der Kühlblock 41 könnte integraler Teil des Motorgehäuses 55 sein, ist aber vorzugsweise ein separater am Motorgehäuse 55 befestigter Bauteil. Am Brennergrundkörper 7 sind ferner eine Mehrzahl von Kühlrippen 56 vorgesehen, um das Brennergehäuse 3 über die Kühlrippen 56 durch Wärmestrahlung in die Umgebung zusätzlich zu kühlen. Um die Kühlleistung der Kühlrippen 56 zu erhöhen, stehen die Kühlrippen 56 vom Brennergrundkörper 7 vorteilhaft an zumindest drei Seiten, vorzugsweise an allen vier Seiten, des Brennergrundkörpers 7 ab.

Der Elektromotor 21 ist im Schweißbrenner 1 in das Motorgehäuse 55 eingesetzt. Hier ist es vorteilhaft, wenn zwischen Elektromotor 21 und Motorgehäuse 55 möglichst kein Spalt besteht, um den Wärmeübergang vom Elektromotor 21 auf das Motorgehäuse 55 zu erhöhen. Der Elektromotor 21 könnte beispielsweise im Motorgehäuse 55 mit einer Klemme geklemmt sein. Der Elektromotor 21 könnte auch in das Motorgehäuse 55 eingepresst sein, beispielsweise mit einer Spielpassung. Zwischen Elektromotor 21 und Motorgehäuse 55 könnte auch eine Hülse vorgesehen sein, die aus einem hinsichtlich des Wärmeübergangs vorteilhaften Material gefertigt ist. Ebenso könnte eine Wärmeleitpaste zwischen Elektromotor 21 und Motorgehäuse 55 vorgesehen sein.

Es ist ebenso vorteilhaft, den Elektromotor 21 hinsichtlich der Verlustleistung bestens auszulegen, weil das auch die entstehende Wärme reduziert. Beispielsweise kann der Wickeldrahtquerschnitt der Motorwicklung hinsichtlich der Verlustwärme ausgelegt werden. Neben den verwendeten Materialien und eingesetzten Permanentmagneten bestimmt bekanntermaßen der Kupferfüllfaktor der Motorwicklung des Elektromotors 21 maßgeblich die Verlustwärme des Elektromotors 21. Je höher der Kupferfüllfaktor, desto höher die Effektivität und umso niedriger die Verlustwärme.

Der Elektromotor 21 kann natürlich auch hinsichtlich der Wärmeleitung vorteilhaft ausgelegt sein. Beispielsweise kann der Stator des Elektromotors 21 vakuumvergossen ausgeführt sein, wobei die Vergussmasse eine hohe thermische Leitfähigkeit, vorzugsweise größer 1,5 W/mK, aufweisen soll. Idealerweise sollte in der Vergussmasse keine Lufteinschlüsse vorhanden sein, weil das die thermische Leitfähigkeit verringern kann. Um die thermische Leitfähigkeit der Vergussmasse zu erhöhen, können in der Vergussmasse Keramikpartikel, wie Bornitrid, enthalten sein.

Weiters ist Regelung and Ansteuerung des Elektromotors 21 für die Verlustleistung von Bedeutung. Hier kann versucht werden, durch stetigere Regelungssignale die Verluste im Vergleich zu impulsartigen, unstetigen Signalen zu reduzieren

Man könnte auch die Stelle des Wärmeüberganges zwischen Elektromotor 21 und Motorgehäuse 55 konzentrieren, um für einen guten Wärmeübergang zu sorgen. Beispielsweise könnte von beiden Seiten thermische Isolationskappen axial in das Blechpaket geschoben werden, die mittig axial voneinander beabstandet sind. Damit entsteht mittig ein am Motorgehäuse 55 anliegender Mantelring ohne Isolationskappen, beispielsweise mit einer axialen Länge von einigen Millimetern, der für einen guten Wärmeübergang auf das Motorgehäuse 55 sorgt.

Der Elektromotor 21 könnte auch abgekapselt ausgeführt sein mit einem gegenüber der Umgebung abgekapseltem Raum zwischen Rotor und Stator. Hierfür könnten geeignete Dichtelemente, wie O-Ringe, vorgesehen sein. Das könnte erreicht werden, indem an einem axialen Ende ein Drehwinkelgeber (Encoder) zur Positionserfassung angeordnet wird und am gegenüberliegenden Ende die Encoder-Auswerteelektronik oder eine Abdeckung. Dieser abgekapselte Raum könnte dann mit dem Schutzgas zusätzlich durchspült werden, um die Kühlung des Elektromotors 21 noch weiter zu erhöhen. In anderen Worten erfolgt diese zusätzliche Kühlung direkt bei der Motorwicklung, also dort wo die Wärme entsteht, und die Wärme wird aus dem abgekapselten Raum durch den Gasstrom abgeführt.

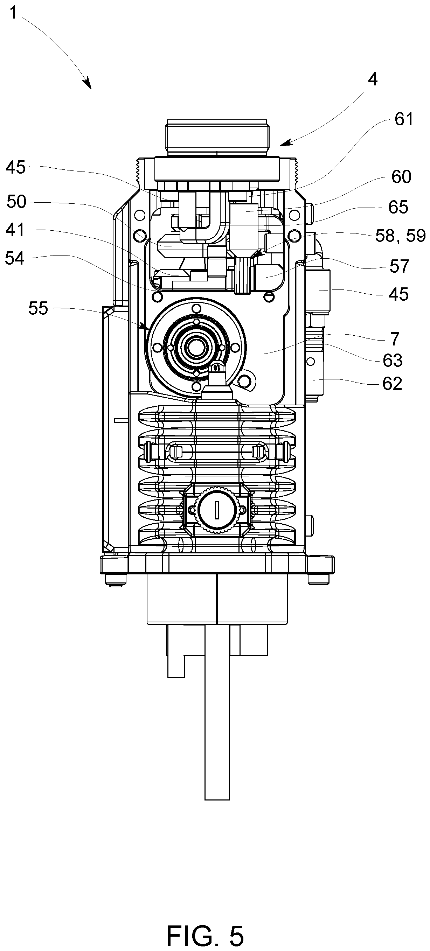

Am Motorgehäuse 55 ist in einer möglichen Ausgestaltung mit einem separaten Kühlblock 41 eine Anschlussfläche 54 für den Kühlblock 41 vorgesehen (Fig.4 und Fig.5). Der Kühlblock 41 liegt möglichst vollflächig an dieser Anschlussfläche 54 an, um einen guten Wärmeübergang sicherzustellen. Dazwischen kann auch eine Wärmeleitpaste aufgebracht sein. In Fig.4 angedeutet sind Gewindelöcher zum Befestigen des Kühlblocks 41.

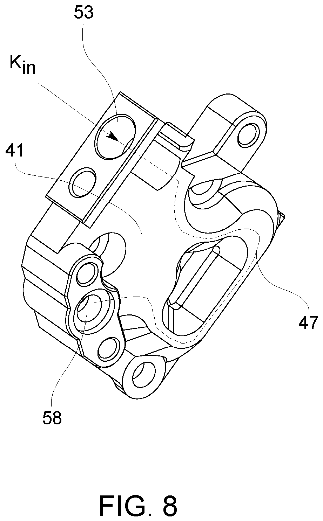

Am Kühlblock 41 ist ferner ein Anschlussteil 57 zum Anschließen der Brennergehäusevorlaufleitung 42 vorgesehen. Das kann ein eigenständiger Bauteil sein, oder kann im Kühlblock 41 integriert sein. Über den Anschlussteil 57 wird ein Vorlaufvolumenstrom Kᵢₙ zugeführt. Der Kühlblock 41 ist in Fig.8 in einer möglichen Ausgestaltung einzeln dargestellt (ohne Anschlussteil 57). In Fig.8 ist gestrichelt ein möglicher Verlauf des Kühlblockkanals 47 dargestellt.

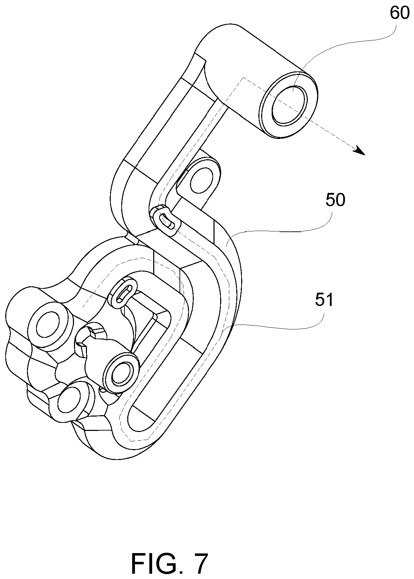

An den Kühlblock 41 mit dem Kühlblockkanal 47 schließt der Isolierkörper 50 mit dem Isolierstreckenkanal 51 an, wobei eine Kühlblockaustrittsöffnung 58 am Kühlblock 41 (Fig.8) mit einer Isolierkörpereintrittsöffnung 59 am Isolierkörper 50 verbunden ist. Die aus dem Kühlblock 41 austretende Kühlflüssigkeit wird damit in den Isolierkörper 50 geleitet. In Fig.7 ist der Isolierkörper 50 in einer möglichen Ausgestaltung einzeln dargestellt. Der Isolierkörper 50 kann direkt am Kühlblock 41 befestigt sein, weil der Isolierkörper 50 elektrisch isolierend ist. In Fig.7 und Fig.8 sind beispielsweise Löcher bzw. Gewindelöcher zur Befestigung dargestellt.

In Fig.7 ist der Verlauf des Isolierkörperkanals 51 beispielhaft gestrichelt angedeutet. Der Isolierkörper 50 ist vorteilhaft so gestaltet, um die Länge des Isolierkörperkanals 51 bei vorhandenem Platz zu maximieren.

Die Kühlflüssigkeit tritt an einer Isolierkörperaustrittsöffnung 60 aus. An die Isolierkörperaustrittsöffnung 60 ist eine Vorlaufverbindungsleitung 61 (als Teil der Brennergehäusevorlaufleitung 42 im Schweißbrenner 1) angeschlossen, die den Isolierkörper 50 mit der Brennerhalsvorlaufleitung 43 verbindet, vorzugsweise über die Kupplung 4.

Der Isolierstreckenkanal 51 erstreckt sich im Isolierkörper 50 zwischen der Isolierkörpereintrittsöffnung 59 und der Isolierkörperaustrittsöffnung 60. Die Isolierkörperaustrittsöffnung 60 ist in dieser Ausführung fluidisch mit der Brennerhalsvorlaufleitung 43 verbunden.

Der Kühlblockkanal 47 erstreckt sich im Kühlblock 41 zwischen einer Kühlblockeintrittsöffnung 53 (beispielsweise ausgebildet durch den Anschlussteil 57) und der Kühlblockaustrittsöffnung 58. Die Kühlblockaustrittsöffnung 58 ist fluidisch mit der Isolierkörpereintrittsöffnung 59 verbunden.

Es ist ferner die Brennergehäuserücklaufleitung 45 dargestellt (zumindest teilweise), die mit der Brennerhalsrücklaufleitung 44 verbunden ist, vorzugsweise über die Kupplung 4.

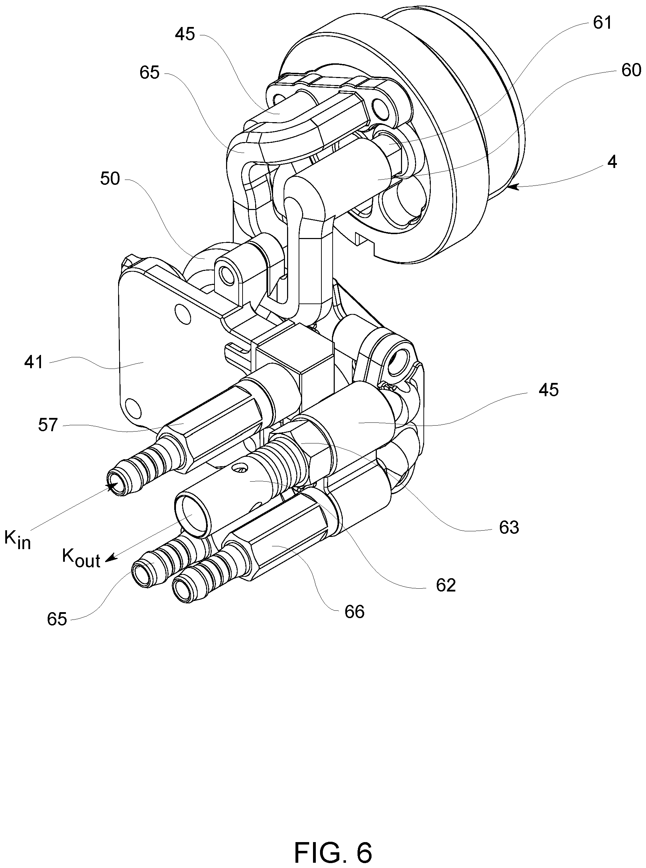

In Fig.5 und Fig.6 ist an der Brennergehäuserücklaufleitung 45 eine Anschlusshülse 62 vorgesehen. Diese dient in dieser Ausgestaltung dazu, eine im Kühlflüssigkeitsrücklauf geführte Schweißleitung 34 elektrisch zu kontaktieren. Dazu kann in der Anschlusshülse 62 eine Schraubklemme 63 integriert sein, um die Schweißleitung 34 in der Anschlusshülse 62 elektrische zu kontaktieren. Die Brennergehäuserücklaufleitung 45 zwischen Anschlusshülse 62 und der Kupplung 4 kann elektrisch leitend ausgeführt sein, beispielsweise als ein in einem 3D-Druckverfahren gefertigter Bauteil aus einer Kupfer-Nickel-Chrom-Legierung. Damit überträgt die Brennergehäuserücklaufleitung 45 in diesem Abschnitt die elektrische Schweißspannung und den elektrischen Schweißstrom auf die Kupplung 4, die beispielsweise aus Messing gefertigt ist. Von der Kupplung 4 kann dann die elektrische Schweißspannung und der elektrischen Schweißstrom auf den Brennerhals 2 übertragen werden. Es könnte aber auch eine separate elektrische Leitung vorgesehen sein.

Über die Brennergehäuserücklaufleitung 45 wird im Kühlkreis ein Rücklaufvolumenstrom Kₒᵤₜ rückgeführt.

In Fig.5 und Fig.6 ist außerdem eine Schutzgasleitung 65 dargestellt, über die Schutzgas in den Brennerhals 2 zugeführt werden kann.

In Fig.5 und Fig.6 ist außerdem eine optionale Ausblasleitung 66 dargestellt, über die ein Druckgas, wie Druckluft oder Schutzgas, angeschlossen werden kann, um den Schweißbrenner 1 und den Brennerhals 2 auszublasen, insbesondere zum Reinigen oder vor dem Tauschen des Schweißbrenners 1 oder des Brennerhalses 2.

In der Ausführung nach Fig.5 und Fig.6 sind die Brennergehäuserücklaufleitung 45, die Schutzgasleitung 65, und gegebenenfalls auch die Ausblasleitung 66 falls vorhanden, in einem Bauteil integriert. Dieser Bauteil kann aus einer Kupfer-Nickel-Chrom-Legierung gefertigt sein, vorteilhaft in einem 3D-Druckverfahren, weil das die Gestaltungsmöglichkeiten erhöht. Dieser Bauteil kann direkt am Isolierkörper 50 befestigt sein, beispielsweise mittels Schraubverbindungen, wobei darauf zu achten ist, insbesondere wenn dieser elektrisch leitfähig ist, dass dieser Bauteil weder den Kühlblock 41 noch das Brennergrundgehäuse 7 berührt, was durch entsprechende konstruktive Auslegung einfach möglich ist.

Durch die Verwendung von 3D-gedruckten Bauteilen, wird die Anzahl der Stromübergänge im System auf ein Minimum reduziert, weil der Bauteil einstückig oder zumindest mit wenigen zusammengefügten Einzelteilen gefertigt werden kann. Jeder Stromübergang sorgt für elektrische Verluste und diese sorgen wiederum für eine Wärmeentwicklung im Schweißbrenner 1. Insbesondere im Schweißstrompfad treten auf Grund der hohen Stromdichten bei Stromübergängen in der Regel wärmerelevante Verluste auf. Mit im_3D-Druckverfahren gefertigten Bauteilen lässt sich das weitestgehend vermeiden oder zumindest reduzieren.

In der oben beschriebenen Ausgestaltung nach Fig.3 wird zuerst der Elektromotor 21 und dann der Brennerhals 2 von Kühlflüssigkeit gekühlt. Damit sind der Kühlblock 41 und der Isolierkörper 50 in der Brennergehäusevorlaufleitung 42 angeordnet und der Kühlblockkanal 47 und der Isolierstreckenkanal 51 sind Teil der Brennergehäusevorlaufleitung 42 im Schweißbrenner 1. Der Kühlkreis kann aber natürlich auch umgedreht werden, sodass zuerst der Brennerhals 2 von der Kühlflüssigkeit gekühlt wird und dann der Elektromotor 21. In diesem Fall würde die Brennergehäuserücklaufleitung 45 in Fig.3 zur Brennergehäusevorlaufleitung 42 im Schweißbrenner 1 werden und die Brennergehäusevorlaufleitung 42 in Fig.3 zur Brennergehäuserücklaufleitung 45. Damit wären der Kühlblock 41 und der Isolierkörper 50 in der Brennergehäuserücklaufleitung 45 angeordnet und der Kühlblockkanal 47 und der Isolierstreckenkanal 51 wären Teil der Brennergehäuserücklaufleitung 45 im Schweißbrenner 1. Brennerhalsvorlaufleitung 43 und Brennerhalsrücklaufleitung 44 des Kühlkreises im Brennerhals 2 wären damit natürlich ebenso verstauscht, ebenso wie die Vorlaufleitung 40 und die Rücklaufleitung 46. An der Erfindung würde das aber nichts ändern.

## Patentansprüche

1. Schweißbrenner mit integrierter Schweißdrahtvorschubeinheit (17) mit einem Elektromotor (21), wobei der Schweißbrenner (1) ein Brennergehäuse (3) und einen Brennerhals (2) umfasst und der Elektromotor (21) im Brennergehäuse (3) angeordnet ist, wobei im Brennerhals (2) eine Brennerhalsvorlaufleitung (43) und eine Brennerhalsrücklaufleitung (44) für eine Kühlflüssigkeit vorgesehen sind und die im Brennerhals (2) liegenden Enden der Brennerhalsvorlaufleitung (43) und der Brennerrücklaufleitung (44) miteinander verbunden sind, wobei im Brennergehäuse (3) eine Brennergehäusevorlaufleitung (42) und eine Brennergehäuserücklaufleitung (45) vorgesehen sind und die Brennergehäusevorlaufleitung (42) mit der Brennerhalsvorlaufleitung (43) verbunden ist und die Brennergehäuserücklaufleitung (45) mit der Brennerhalsrücklaufleitung (44) verbunden ist, **dadurch gekennzeichnet, dass** im Brennergehäuse (3) ein Kühlblock (41) mit einem durch den Kühlblock (41) durchgehenden Kühlblockkanal (47) und ein Isolierkörper (50) mit einem durch den Isolierkörper (50) durchgehenden Isolierstreckenkanal (51) angeordnet ist, dass der Kühlblockkanal (47) und der Isolierstreckenkanal (51) entweder Teil der Brennergehäusevorlaufleitung (42) oder Teil der Brennergehäuserücklaufleitung (45) sind, dass der Isolierkörper (50) aus einem elektrisch isolierenden Material gefertigt ist **und dass** eine Länge des Isolierstreckenkanal (51) im Isolierkörper (50) mindestens 50mm, vorzugsweise mindestens 75mm und besonders bevorzugt mindestens 100mm, beträgt.

2. Schweißbrenner nach Anspruch 1, **dadurch gekennzeichnet, dass** das Brennergehäuse (3) einen Brennergrundkörper (7) umfasst, **und dass** der Kühlblock (41) im Brennergrundkörper (7), vorzugsweise in einem Motorgehäuse (55) des Brennergrundkörpers (7) zur Aufnahme des Elektromotors (21), integriert ist.

3. Schweißbrenner nach Anspruch 2, **dadurch gekennzeichnet, dass** der Isolierkörper (50) am Brennergrundkörper (7), vorzugsweise am Motorgehäuse (55) des Brennergrundkörpers (7), befestigt ist.

4. Schweißbrenner nach Anspruch 1, **dadurch gekennzeichnet, dass** das Brennergehäuse (3) einen Brennergrundkörper (7) umfasst, **und dass** der Kühlblock (41) ein separater am Brennergrundkörper (7), vorzugsweise an einem Motorgehäuse (55) des Brennergrundkörpers (7) zur Aufnahme des Elektromotors (21), angeordneter Bauteil ist.

5. Schweißbrenner nach Anspruch 4, **dadurch gekennzeichnet, dass** der Isolierkörper (50) am Kühlblock (41) befestigt ist, wobei am Kühlblock (41) eine Kühlblockaustrittsöffnung (58) vorgesehen ist, die mit einer Isolierkörpereintrittsöffnung (59) am Isolierkörper (50) verbunden ist.

6. Schweißbrenner nach einem der Ansprüche 1 bis 5, **dadurch gekennzeichnet, dass** am Isolierkörper (50) eine Isolierkörperaustrittsöffnung (60) vorgesehen ist, die entweder mit der Brennerhalsvorlaufleitung (43) oder der Brennerhalsrücklaufleitung (44) im Brennerhals (2) verbunden ist.

7. Schweißbrenner nach einem der Ansprüche 1 bis 6, **dadurch gekennzeichnet, dass** die Brennergehäuserücklaufleitung (45) oder die Brennergehäusevorlaufleitung (42) zumindest teilweise als ein in einem 3D-Druckverfahren gefertigter Bauteil ist, vorzugsweise aus einer Kupfer-Nickel-Chrom-Legierung.

8. Schweißbrenner nach einem der Ansprüche 4 bis 7, **dadurch gekennzeichnet, dass** der Kühlblock (41) zumindest teilweise als ein in einem 3D-Druckverfahren gefertigter Bauteil ist, vorzugsweise aus einer Kupfer-Nickel-Chrom-Legierung.

9. Schweißbrenner nach einem der Ansprüche 1 bis 8, **dadurch gekennzeichnet, dass** im Schweißbrenner (1) ein Leitfähigkeitssensor (48) vorgesehen ist, der eingerichtet ist, die elektrische Leitfähigkeit der Kühlflüssigkeit zu erfassen.

10. Schweißgerät mit einer Schweißstromquelle (30) und einem Schweißbrenner (1) nach einem der Ansprüche 1 bis 9, wobei die Brennergehäusevorlaufleitung (42) im Schweißbrenner (1) über eine Vorlaufleitung (40) und die Brennergehäuserücklaufleitung (45) über eine Rücklaufleitung (46) mit einer Kühleinheit (32) des Schweißgeräts (36) verbunden sind.

11. Schweißgerät nach Anspruch 10, **dadurch gekennzeichnet, dass** die Schweißdrahtvorschubeinheit (17) vorgesehen ist, im Betrieb des Schweißgeräts (36) einen Schweißdraht (20) durch den Brennerhals (2) zu fördern, wobei die Schweißstromquelle (30) im Schweißgerät (36) eingerichtet ist, im Betrieb des Schweißgeräts (36) über eine Schweißleitung (34) eine Schweißspannung an den Schweißdraht (20) anzulegen.

12. Schweißgerät nach Anspruch 11, **dadurch gekennzeichnet, dass** der Schweißbrenner (1) eingerichtet ist, eine mit dem Leitfähigkeitssensor (48) erfasste elektrische Leitfähigkeit der Kühlflüssigkeit an eine Steuereinheit (35) der Schweißstromquelle (30) des Schweißgeräts (36) zu übermitteln und dass die Steuereinheit (35) eingerichtet ist, die Schweißspannung in Abhängigkeit von der erfassten Leitfähigkeit der Kühlflüssigkeit zu begrenzen.
